# EUROPÄISCHE PATENTANMELDUNG

(11) **EP 1 408 273 A2**
(43) Veröffentlichungstag der Anmeldung: **14.04.2004**
(21) Anmeldenummer: 03018853.6
(22) Anmeldetag: 19.08.2003
(51) Int. Cl.: F16P 3/14

(54) **Schutzvorrichtung zur Überwachung eines mit einem Bauteil zu bewegenden Schutzbereichs**

(30) Priorität: 09.10.2002 DE 10247136
(71) Anmelder: Sick AG, 79183 Waldkirch, Breisgau (DE)
(72) Erfinder: Bergbach, Roland, 79312 Emmendingen (DE); Wüstefeld, Martin, 79350 Sexau (DE)
(74) Vertreter: Manitz, Finsterwald & Partner GbR

(57) **Zusammenfassung**

Eine Schutzvorrichtung zur Befestigung an einem entlang einer Bahn (B) beweglichen Bauteil (32) und zur Überwachung eines mit dem Bauteil zu bewegenden Schutzbereichs (62) umfasst einen Lichtsender (42) zur Abstrahlung eines divergenten Sendelichtbündels (50,50') in einen den Schutzbereich (62) enthaltenden Raumbereich, einen Lichtempfänger (44) zum Empfang wenigstens eines Teils des Lichts des in den Raumbereich gestrahlten Sendelichtbündels (50,50') des Lichtsenders (42) und zur Abgabe entsprechender Empfangssignale, und eine Begrenzungseinrichtung (52), die in Richtung eines Sendelichtweges hinter einem Abschnitt des Sendelichtweges, der den Schutzbereich (62) enthält, angeordnet ist und mittels derer das Sendelichtbündel (50,50') auf ein die Weite des Schutzbereichs (62) in wenigstens einer Richtung bestimmendes, weniger divergentes Empfangslichtbündel (58) begrenzbar ist.

## Beschreibung

Die vorliegende Erfindung betrifft eine Schutzvorrichtung zur Befestigung an einem entlang einer Bahn beweglichen Bauteil und zur Überwachung eines mit dem Bauteil zu bewegenden Schutzbereichs sowie ein Verfahren zur Überwachung eines Schutzbereichs, der mit einem entlang einer Bahn bewegten Bauteil mitzubewegen ist.

In vielen Bereichen werden Maschinen verwendet, die von einer Antriebseinrichtung automatisch bewegte Bauteile aufweisen oder selbst bewegt werden. Halten sich Personen im Bewegungsbereich dieser Bauteile auf, können diese potentiell durch die Bewegung der Bauteile gefährdet werden. Zum Schutz von Personen können bei solchen Maschinen daher Schutzvorrichtungen an dem bewegten Bauteil angeordnet sein, die eine Überwachung eines mit dem Bauteil mitbewegten Schutzbereichs gestatten. Wird die Präsenz einer Person in dem mitbewegten Schutzbereich festgestellt, kann die Bewegung des Bauteils unterbrochen werden.

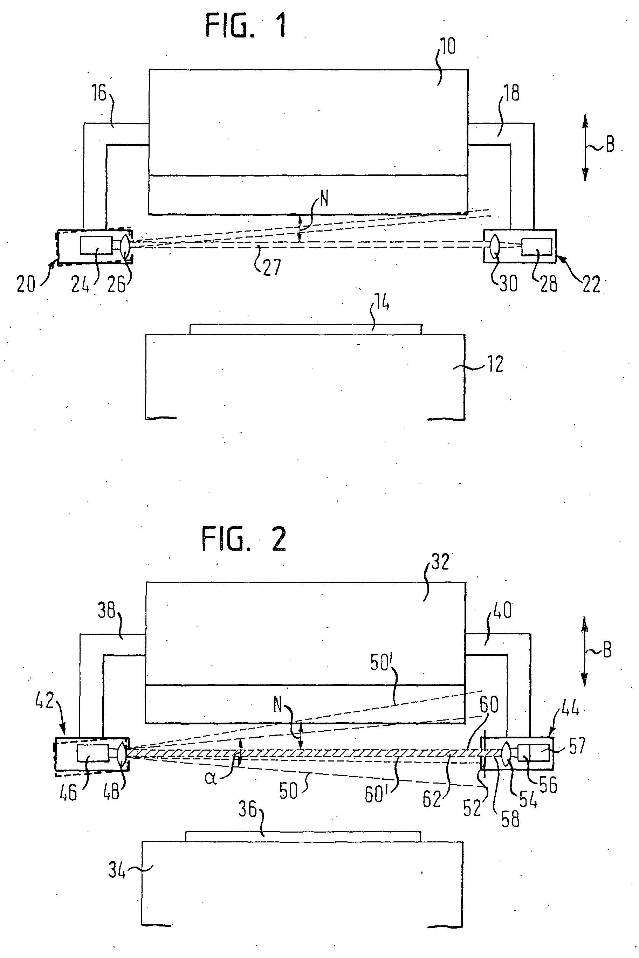

Ein Beispiel für eine solche Maschine ist eine in Fig. 1 schematisch teilweise gezeigte Gesenk-Biegepresse, die ein von einer in Fig. 1 nicht gezeigten Antriebseinrichtung angetriebenes Biegewerkzeug 10, beispielsweise mit einer V-förmig ausgebildeten Unterseite, und ein stationäres Unterwerkzeug 12 aufweist, dessen Oberseite beispielsweise eine der Form der Unterseite des Biegewerkzeugs 10 entsprechende V-Nut aufweisen kann. Zum Formen eines Werkstücks 14 wird dieses von einer Bedienperson auf das Unterwerkzeug 12 gelegt. Zur Erzielung einer kurzen Zykluszeit wird das Biegewerkzeug 10 aus einer Anfangsposition mit hoher Geschwindigkeit entlang einer Bewegungsrichtung B auf das Werkstück 14 zu bewegt, dann aber wieder abgebremst, so dass es mit einer für den Biegevorgang geeigneten, niedrigeren Geschwindigkeit auf das Werkstück 14 auftrifft und dieses in das Unterwerkzeug 12 drückt. Die Verlangsamung der Bewegung des Biegewerkzeugs 10 kann u. a. wegen dessen Trägheit nicht instantan erfolgen. Die Strecke, die notwendig ist, um das Biegewerkzeug 10 von der schnellen Geschwindigkeit bis zum Stillstand abzubremsen, wird auch als Nachlaufweg N bezeichnet.

Zum Schutz einer Person, die Werkstücke 14 in die Gesenk-Biegepresse einlegt, sind an zwei Haltearmen 16 und 18 ein Lichtsender 20 und ein Lichtempfänger 22 angebracht, die zusammen eine Einweglichtschranke bilden. Der Lichtsender 20, der eine Lichtquelle 24 und eine fokussier ende Sendeoptik 26 aufweist, strahlt ein im wesentlichen paralleles Sendelichtbündel 27 im Abstand der Nachlaufstrecke N parallel zu der Unterseite des Biegewerkzeugs 10 auf den Lichtempfänger 22, der ein Photodetektionselement mit einer Auswerteelektronik 28 und eine Empfangsoptik 30 zur Fokussierung des empfangenen Lichtstrahls auf das Photodetektionselement 28 mit der Auswerteelektronik aufweist. Die Auswerteelektronik ist so ausgebildet, dass bei einer Unterbrechung des Lichtweges zwischen dem Lichtsender 20 und dem Lichtempfänger 22 ein Signal an die Antriebseinrichtung abgebbar ist, damit diese die Bewegung des Biegewerkzeugs 10 schnellstmöglich abbremst. Das von dem Lichtsender 20 abgegebene, parallele Sendelichtbündel definiert daher einen Schutzbereich, der aufgrund seines der Größe der Nachlaufstrecke N entsprechenden Abstands von der Unterseite des Biegewerkzeugs 10 eine Verletzung einer Person verhindert.

In der Praxis treten jedoch durch die Bewegung des Biegewerkzeugs 10 Schwingungen der Haltearme 16 und 18 auf, wodurch beispielsweise der Lichtsender 20 und damit auch das von dem Lichtsender 20 abgegebene parallele Sendelichtbündel 27 relativ zu dem Lichtsender 20 gekippt wird (in Fig. 1 durch kurz gestrichelte Linien veranschaulicht). Bedingt durch den langen Lichtweg können selbst kleine Kippwinkel zu großen Bewegungen des Sendelichtbündels 27 in der Ebene des Lichtempfängers 22 und insbesondere zu einem Auswandern aus einer Empfangsfläche des Lichtempfängers 22 führen. Dadurch ist auch ohne die Präsenz eines Körperteils einer Person zwischen dem Biegewerkzeug 10 und dem Werkstück 14 das Sendelichtbündel 27 nicht mehr von dem Lichtsender 22 empfangbar. Die Auswerteelektronik wird daher eine Unterbrechung des Lichtwegs feststellen, so dass die Gesenk-Biegepresse gestoppt wird. Dies erhöht in unnötiger Weise die Ausfallzeiten der Biegepresse.

Um die Ausfallzeit zu erniedrigen, kann alternativ eine Empfangsfläche des Lichtempfängers 22 vergrößert werden, so dass der Sendelichtstrahl 27 des Lichtsenders 20 bei Schwingungen nicht so leicht aus dem Lichtempfänger 22 auswandert. Dann kann jedoch der Fall auftreten, dass das Vorhandensein eines Körperteils einer Person zwischen dem Biegewerkzeug 10 und dem Werkstück 14, in Fig. 1 beispielsweise nahe dem Lichtempfänger 22, nicht feststellbar ist, obwohl es sich in einer Entfernung innerhalb des Nachlaufwegs N unter dem Biegewerkzeug 10 befindet. Dies bedeutet dann eine Verringerung der Arbeitssicherheit.

So gesicherte Gesenk-Biegepressen haben daher den Nachteil, dass sie entweder erhöhte Sicherheitsrisiken für das Bedienpersonal bergen oder unerwünscht hohe Ausfallzeiten aufweisen.

Der vorliegenden Erfindung liegt daher die Aufgabe zugrunde, eine Schutzvorrichtung zur Befestigung an einem entlang einer Bahn beweglichen Bauteil und zur Überwachung eines mit dem Bauteil zu bewegenden Schutzbereichs bereitzustellen, das eine gute Funktionssicherheit aufweist, sowie ein Verfahren zur Überwachung eines Schutzbereichs anzugeben, der mit einem entlang einer Bahn bewegten Bauteil mitzubewegen ist.

Die Aufgabe wird gelöst durch eine Schutzvorrichtung mit den Merkmalen des Anspruchs 1.

Die erfindungsgemäße Schutzvorrichtung zur Befestigung an einem entlang einer Bahn beweglichen Bauteil und zur Überwachung eines mit dem Bauteil zu bewegenden Schutzbereichs umfasst einen Lichtsender zur Abstrahlung eines divergenten Sendelichtbündels in einen den Schutzbereich enthaltenden Raumbereich, einen Lichtempfänger zum Empfang wenigstens eines Teils des Lichts des in den Raumbereich gestrahlten Sendelichtbündels des Lichtsenders und zur Abgabe entsprechender Empfangssignale und eine Begrenzungseinrichtung, die in Richtung eines Sendelichtweges hinter einem Abschnitt des Sendelichtweges, der den Schutzbereich enthält, angeordnet ist und mittels derer das Sendelichtbündel auf ein die Weite des Schutzbereichs in wenigstens einer Richtung bestimmendes, weniger divergentes Empfangslichtbündel begrenzbar ist.

Die Aufgabe wird weiterhin gelöst durch ein Verfahren zur Überwachung eines Schutzbereichs mit den Merkmalen des Anspruchs 16.

Bei dem erfindungsgemäßen Verfahren zur Überwachung eines Schutzbereichs, der mit einem entlang einer Bahn bewegten Bauteil mitzubewegen ist, wird ein divergentes Sendelichtbündel ausgesendet und mit dem Bauteil mitbewegt, das divergente Sendelichtbündel nach Zurücklegen eines den Schutzbereich umfassenden Lichtweges auf ein mit dem Bauteil mitbewegtes, die Weite des Schutzbereichs in wenigstens einer Richtung bestimmendes, weniger divergentes Empfangslichtbündel begrenzt und es wird das Empfangslichtbündel empfangen und überwacht.

Bei dem Bauteil, mit dem der Schutzbereich mitzubewegen ist, kann es sich um ein im Prinzip beliebiges, entlang einer, vorzugsweise fest vorgegebenen, Bahn bewegliches und insbesondere durch einen wenigstens halbautomatischen Antrieb bewegbares Bauteil handeln.

Zu Mitbewegung des Schutzbereichs ist die erfindungsgemäße Schutzvorrichtung ist zur Befestigung an diesem Bauteil vorgesehen.

Erfindungsgemäß wird ein divergentes Sendelichtbündel ausgesendet und mit dem Bauteil mitbewegt. Dazu ist der Lichtsender zur Abstrahlung des divergenten Sendelichtbündels in einen den Schutzbereich enthaltenden Raumbereich vorgesehen, so dass sowohl dieser Raumbereich als auch das Sendelichtbündel mit dem Bauteil mitbewegbar sind. Der Lichtsender kann dabei eine Lichtquelle, beispielsweise für Licht im sichtbaren oder infraroten Wellenbereich des Lichts, und ggf. eine Sendeoptik zur Formung des divergenten Sendelichtbündels aus von der Lichtquelle abgegebenem Licht umfassen. Das Sendelichtbündel ist dabei in wenigstens einer Divergenzrichtung, d.h. insbesondere einer Schnittebene durch das Sendelichtbündel entlang einer Ausbreitungsrichtung des Lichts, divergent.

Die erfindungsgemäße Begrenzung des Sendelichtbündels erfolgt bei der erfindungsgemäßen Schutzvorrichtung durch die Begrenzungseinrichtung, die so angeordnet ist, dass das Sendelichtbündel frühestens nach Zurücklegen eines den Schutzbereich enthaltenden Weges in Richtung der Divergenz des Sendelichtbündels begrenzt wird. Auch die Begrenzungseinrichtung ist daher mit dem Bauteil mitbewegbar und insbesondere an diesem haltbar.

Ein durch die Begrenzungseinrichtung bestimmtes Teilbündel des Lichts des divergenten Sendelichtbündels wird weiterhin nach der Begrenzung als mit dem Bauteil mitbewegtes Empfangslichtbündel empfangen und überwacht. Dazu dient bei der erfindungsgemäßen Vorrichtung der an dem Bauteil zu befestigende und dann mit dem Bauteil mitbewegbare Lichtempfänger, der hierzu ein Photodetektionselement für Licht des Lichtsenders und gegebenenfalls eine Empfangsoptik zur Fokussierung des Empfangslichtbündels auf das Photodetektionselement aufweisen kann.

Das im Gegensatz zum Stand der Technik divergente Sendelichtbündel definiert erfindungsgemäß nicht den Schutzbereich, sondern enthält ihn nur.

Die Festlegung des Schutzbereichs erfolgt vielmehr dadurch, dass das divergente Sendelichtbündel nach Zurücklegen des den Schutzbereich umfassenden Lichtweges auf ein die Weite des Schutzbereichs in wenigstens einer Richtung bestimmendes weniger divergentes Empfangslichtbündel begrenzt wird. Das Empfangslichtbündel kann insbesondere auch parallel oder sogar konvergent sein. Der Begriff des weniger divergenten Empfangslichtbündels schließt daher im Sinne der vorliegenden Erfindung diese beiden Alternativen mit ein. Durch die Begrenzung wird also gewissermaßen aus dem divergenten, d.h. aufgefächerten Sendelichtbündel ein schmaleres, das heißt weniger divergentes, den Schutzbereich definierendes Teilbündel ausgeschnitten, das nach der Begrenzung bzw. der Begrenzungseinrichtung als mit dem Bauteil mitbewegtes Empfangslichtbündel empfangen und überwacht wird. Es wird also nur die Blockierung des Teilbündels und damit des entsprechenden Empfangslichtbündels überwacht, so dass dieses und insbesondere dessen Weite in einer Richtung bzw. das Teilbündel und dessen entsprechende Weite den Schutzbereich definieren. Die Begrenzungseinrichtung bestimmt also das Teilbündel des Sendelichtbündels zwischen dem Lichtsender und der Begrenzungseinrichtung, das als Empfangslichtbündel von dem Lichtempfänger empfangbar ist, und definiert so den Schutzbereich.

Bei einer Bewegung des Sendelichtbündels durch Schwingungen in einer Richtung, in der das Sendelichtbündel divergent ist und in der eine Begrenzung erfolgt, wird dann nur ein anderes Teilbündel des Sendelichtbündels als Empfangslichtbündel verwendet. Die Lage des Schutzbereichs bleibt jedoch gleich, da das Empfangslichtbündel bzw. die Begrenzungseinrichtung mit dem Bauteil mitbewegt werden und eine schwingungsbedingte Bewegung der Begrenzungseinrichtung oder des Lichtempfängers nur zu kleinen Verschiebungen des Schutzbereichs, nicht aber zu Schwenkbewegungen mit teilweise großen Auslenkungen des Teilbündels führen.

Durch geeignete Anordnung der Begrenzungseinrichtung kann also der Schutzbereich auch bei einer Schwingung des Lichtsenders in einer konstanten Lage relativ zu dem Bauteil gehalten werden.

Zweckmäßigerweise wird ein Sendelichtbündel verwendet, das wenigstens in einer Richtung tangential zu der Bahn des Bauteils divergent ist, wozu der Lichtsender entsprechend auszurichten ist. Die Begrenzung erfolgt dann wenigstens in der gleichen Richtung, was durch entsprechende Anordnung der Begrenzungseinrichtung geschehen kann. Auf diese Weise kann der Schutzbereich vor dem Bauteil herbewegt werden.

Damit wird ein Auswandern des Sendelichtbündels aus dem Lichtempfänger weitgehend vermieden, so dass eine durch eine Relativbewegung von Lichtsender und Lichtempfänger hervorgerufene Unterbrechung des Lichtweges und eine damit erfolgende fehlerhafte Meldung einer Verletzung des Schutzbereichs, die beispielsweise eine Abbremsung des Bauteils zur Folge haben kann, vermieden wird.

Es ergibt sich so eine besonders große Funktionssicherheit der erfindungsgemäßen Schutzvorrichtung auch bei Schwingungen des Bauteils, an dem die Schutzvorrichtung befestigt ist.

Weiterhin erlaubt die Verwendung eines divergenten Sendelichtbündels eine besonders einfache Justierung des Lichtsenders relativ zu der Begrenzungseinrichtung bzw. dem Lichtempfänger, da bei einer Kippung des Lichtsenders gegenüber dem Lichtempfänger nur ein anderes Teilbündel des Sendelichtbündels als Empfangslichtbündel empfangbar ist.

Weiterbildungen und bevorzugte Ausführungsformen der Erfindung sind in der Beschreibung, den Ansprüchen und den Zeichnungen beschrieben.

Ein Öffnungswinkel des Sendelichtbündels, der die Divergenz des Sendelichtbündels in der Divergenzrichtung bestimmt, kann vorzugsweise unter anderem in Abhängigkeit von dem Abstand zwischen dem Lichtsender und der Begrenzungseinrichtung gewählt werden, da dieser Abstand zusammen mit dem Öffnungswinkel die Weite des Sendelichtbündels an der Begrenzungseinrichtung bestimmt. Es ist dabei bevorzugt, dass ein Öffnungswinkel des Sendelichtbündels so gewählt ist, dass in eine vorgegebenen Richtung orthogonal zum Sendelichtweg unmittelbar vor der Begrenzungseinrichtung eine Weite des Sendelichtbündels um einen Faktor 10 größer ist als eine entsprechende Weite des Empfangslichtbündels direkt an der Begrenzungseinrichtung. Eine so große Divergenz des Sendelichtbündels relativ zu der des Empfangslichtbündels erlaubt eine besonders einfache Justierung und hohe Funktionssicherheit, insbesondere wenn nach Montage an dem Bauteil die vorgegebene Richtung tangential zu der Bahn des Bauteils angeordnet ist.

Bei einer Vorgabe des Öffnungswinkels des Sendelichtbündels unabhängig von den Besonderheiten des Bauteils und insbesondere dessen Bewegung kann vergleichsweise viel Licht des Lichtsenders bedingt durch die Divergenz des Sendelichtbündels währen des gesamten Betriebs ungenutzt bleiben. Es ist daher bevorzugt, dass ein Öffnungswinkel des Sendelichtbündels so gewählt ist, dass in einer vorgegebenen Richtung orthogonal zum Sendelichtweg unmittelbar vor der Begrenzungseinrichtung eine Weite des Sendelichtbündels direkt an der Begrenzungseinrichtung größer ist als eine durch eine Relativbewegung von Lichtsender und Begrenzungseinrichtung verursachte, mittlere zu erwartende Bewegungsamplitude des Sendelichtbündels unmittelbar an der Begrenzungseinrichtung. Auf diese Weise wird bei gegebener Funktionssicherheit möglichst viel Licht des Lichtsenders beim Betrieb der Schutzvorrichtung auch tatsächlich zur Überwachung des Schutzbereichs genutzt.

Die Begrenzungseinrichtung kann grundsätzlich beliebige Mittel umfassen, mittels derer das divergente Sendelichtbündel in seiner Weite in der vorgegebenen Richtung auf das Empfangslichtbündel begrenzbar ist. Beispielsweise kann es sich dabei um eine Begrenzung der lichtempfindlichen Fläche des Photodetektionselements handeln. Es ist jedoch bevorzugt, dass die Begrenzungseinrichtung eine Blende umfasst. Eine solche Begrenzungseinrichtung eignet sich insbesondere zur Verwendung bei Einweglichtschranken, d.h. für den Fall, dass der Lichtsender und der Lichtempfänger auf sich gegenüberliegenden Seiten des Schutzbereichs angeordnet sind. Durch Form und Größe der das Sendelichtbündel begrenzenden Blende kann dabei der Schutzbereich sehr einfach festgelegt werden. Die Blende kann insbesondere auch als Teil des Lichtempfängers ausgebildet sein.

Es ist weiterhin bevorzugt, dass zur Begrenzung des Sendelichtbündels ein reflektierendes Element verwendet wird. Insbesondere ist es bei der erfindungsgemäßen Schutzvorrichtung bevorzugt, dass die Begrenzungseinrichtung ein reflektierendes Element umfasst, an dem ein dem Lichtempfänger zuzuführendes Teilbündel des divergenten Sendelichtbündels reflektierbar ist. Das für Licht des Lichtsenders reflektierend wirkende reflektierende Element wirkt damit ähnlich wie eine Blende, indem nur auf die Fläche des reflektierenden Elements auftreffendes Licht des Sendelichtbündels als Empfangslichtbündel reflektiert wird. Größe, Form und Ausrichtung der reflektierenden Fläche, die vorzugsweise von einem für Licht des Lichtsenders nicht oder nur wenig reflektierenden Bereich umgeben ist, bestimmen dabei die Weite bzw. Divergenz des Empfangslichtbündels und die Richtung, in der das Sendelichtbündel begrenzt wird. Darüber hinaus erlaubt es gleichzeitig eine Umlenkung des Lichtweges.

Bei einer anderen Ausführungsform der Erfindung ist es bevorzugt, dass zur Begrenzung des Sendelichtbündels ein retroreflektives Element ver-, wendet wird. Dazu ist es bei der erfindungsgemäßen Schutzvorrichtung bevorzugt, dass die Begrenzungseinrichtung ein retroreflektives Element umfasst, an dem ein dem Lichtempfänger zuzuführendes Teilbündel des divergenten Sendelichtbündels reflektierbar ist. Unter einem retroreflektiven Element wird hierbei ein Element verstanden, das einfallendes Licht wieder in Richtung des einfallenden Lichts zurückreflektiert. Insbesondere kann es sich bei dem retroreflektiven Element um ein 90°-Prisma, einen Tripelreflektor oder entsprechende Reflexfolien handeln. Selbst bei einer Kippung des retroreflektiven Elements gegenüber dem Lichtsender kann so Licht wieder in Richtung des Lichtsenders zurückgeworfen werden. Analog zu dem Fall des reflektierenden Elements einer Begrenzungseinrichtung bestimmen auch hier Größe, Form und Ausrichtung des retroreflektiven Elements bzw. dessen optisch wirksamer Fläche die Wirkung auf das Sendelichtbündel. Das resultierende Empfangslichtbündel kann insbesondere konvergent sein.

Bei den beiden zuvor genannten Alternativen ist es besonders bevorzugt, dass der Lichtsender und der Lichtempfänger auf der gleichen Seite des Schutzbereichs angeordnet sind. Die Schutzvorrichtung umfasst daher dann eine spezielle Reflexionslichtschranke, bei der vorzugsweise Lichtsender und Lichtempfänger in einem Gehäuse angeordnet sein können. Die Anordnung von Lichtsender und Lichtempfänger auf der gleichen Seite des Schutzbereichs erlaubt insbesondere eine besonders einfache Justierung von Lichtsender und Lichtempfänger schon vor dem Anbau an das Bauteil.

In diesem Fall ist es weiterhin besonders bevorzugt, dass der Lichtsender und der Lichtempfänger einen gemeinsamen Strahlteiler und eine wenigstens in Senderichtung nach dem Strahlteiler angeordnete gemeinsame Sende-/Empfangslinse aufweisen. Der Strahlteiler, der insbesondere einen halbdurchlässigen Spiegel umfassen kann, erlaubt dabei eine räumlich getrennte Anordnung einer Lichtquelle des Lichtsenders und eines Photodetektionselements des Lichtempfängers, obgleich sich das Sendelichtbündel und das Empfangslichtbündel wenigstens im Bereich der Sende-/Empfangslinse überlappen. Auf diese Weise sind eine Sende- und Empfangsoptik der erfindungsgemäßen Schutzvorrichtung wenigstens teilweise integriert, was, insbesondere in Verbindung mit einem retroreflektiven Element als Begrenzungseinrichtung, zu einem einfachen Aufbau bei gleichzeitiger hoher Genauigkeit der Strahlführung führt.

Es ist weiterhin bevorzugt, dass der Lichtempfänger wenigstens ein Empfangselement aufweist, dessen Empfangsfläche in einer Divergenzrichtung des Empfangslichtbündels, die der Richtung entspricht, in der das divergente Sendelichtbündel durch die Begrenzungseinrichtung begrenzt wurde, eine größere Ausdehnung aufweist als in einer Richtung orthogonal dazu. Bei diesem Empfangselement kann es sich insbesondere um ein Photodetektionselement handeln. Wie zuvor im Zusammenhang mit dem Begriff des weniger divergenten Empfangslichtbündels erwähnt, braucht das Empfangslichtbündel in der Divergenzrichtung nicht unbedingt divergent zu sein, sondern kann auch parallel oder konvergent sein. Auf diese Weise kann ein Wandern des Empfangslichtbündels aus einer Empfangfläche des Empfangselements, das durch ein Verkippen des Lichtsenders und/oder des Lichtempfängers bzw. der Begrenzungseinrichtung mit einem reflektierenden oder retroreflektiven Element hervorgerufen wird, zumindest bei kleinen Verkippungswinkeln vermieden werden. Besonders bevorzugt ist die Ausdehnung des Empfangselements in der Divergenzrichtung des Empfangslichtbündels um einen Faktor von wenigstens 4 größer als dessen Ausdehnung in einer dazu orthogonalen Richtung.

Zur Erzielung einer besonders hohen Lichtintensität auf einem Photodetektionselement des Lichtempfängers weist der Lichtsender vorzugsweise eine Sendeoptik und/oder der Lichtempfänger eine Empfangsoptik auf. Um eine erhöhte Bildtiefenschärfe zu erhalten, ist es dann bevorzugt, dass der Lichtempfänger eine Schlitzblende aufweist, deren Schlitz parallel zu einer Divergenzrichtung des Empfangslichtbündels, die der Richtung entspricht, in der das divergente Sendelichtbündel durch die Begrenzungseinrichtung begrenzbar ist, angeordnet ist. Der Schlitz ist dabei parallel zur der Divergenzrichtung des Empfangslichtbündels am Ort des Schlitzes ausgerichtet, das heißt, dass die Divergenzrichtung in Bezug auf die Richtung des Empfangslichtbündels definiert ist. Es wird so eine erhöhte Tiefenschärfe in der Divergenzrichtung des Empfangslichtbündels erzielt, nicht jedoch in einer Richtung orthogonal dazu, was insbesondere bei Verwendung von asymmetrischen Empfangselementen nicht notwendig ist. Hierdurch werden die Genauigkeitsanforderungen für die Justage der Blende bzw. des Lichtempfängers in Schlitzrichtung wie auch die Genauigkeitsanforderung an die Fertigung reduziert.

Das Sendelichtbündel braucht erfindungsgemäß nur in einer Richtung divergent zu sein, die vorzugsweise tangential zu der Bahn, entlang derer das Bauteil bewegt wird, ausgerichtet ist. Es kann sich dann ein sehr schmaler, d.h. fast linienförmiger Schutzbereich ergeben. Für viele Anwendungen ist es jedoch wünschenswert, dass ein flächiger Schutzbereich überwacht wird. Es ist daher bevorzugt, dass der Lichtsender so ausgebildet ist, dass von ihm ein Sendelichtbündel abgebbar ist, das in zwei zueinander orthogonalen Richtungen unterschiedlich stark divergiert. Während in einer Richtung, in der die Begrenzungseinrichtung das divergente Sendelichtbündel begrenzt, beispielsweise ein nach den oben genannten Kriterien gewählter Öffnungswinkel vorgesehen sein kann, kann das Sendelichtbündel in einer dazu orthogonalen Richtung beispielsweise wesentlich stärker divergent gewählt werden, so dass sich ein flächiger Schutzbereich ergibt, dessen Flächennormale vorzugsweise tangential zu der Bahn des Bauteils ist.

Es ist daher besonders bevorzugt, dass der Lichtsender und die Begrenzungseinrichtung zur Überwachung eines in einer zu einer Bewegungsrichtung des Bauteils orthogonalen Richtung im Wesentlichen flächigen Schutzbereichs ausgebildet sind. Die Begrenzungseinrichtung kann dabei insbesondere quer zu der Richtung, in der sie das Sendelichtbündel begrenzt, eine größere Ausdehnung aufweisen als in der dazu orthogonalen Richtung.

Es ist dann weiterhin bevorzugt, dass der Lichtempfänger eine Blende mit einer schmetterlingsförmigen Blendenöffnung aufweist, die zwei Flügelbereiche umfasst, die quer zu der Richtung angeordnet sind, in der das divergente Sendelichtbündel durch die Begrenzungseinrichtung begrenzbar ist. Besonders bevorzugt ist dabei eine minimale Weite der Blendenöffnung in etwa so groß, wie die Ausdehnung eines reflektierenden oder retroreflektiven Elements der Begrenzungseinrichtung in der Richtung, in der die Begrenzungseinrichtung das divergente Sendelichtbündel begrenzt. Auf diese Weise kann zum einen eine Dejustierung zwischen der Begrenzungseinrichtung und dem Sensor in der Begrenzungsrichtung, in der die Begrenzungseinrichtung das divergente Sendelichtbündel begrenzt, leicht erkannt werden, da bei einer hinreichend großen Dejustierung das Empfangslichtbündel nicht mehr durch die Blendenöffnung treten kann. Die Lage des Schutzbereichs in der Begrenzungsrichtung relativ zu dem Bauteil ist daher konstant haltbar. Zum anderen besteht aber eine Justierungstoleranz bezüglich einer Neigung der Begrenzungseinrichtung quer zur Begrenzungsrichtung, da sich die Blendenöffnung nach außen hin aufweitet, so dass ein Kippen des Schutzbereichs um die Strahlrichtung um entsprechende kleine Winkel nicht zu einer Unterbrechung des Empfangslichtbündels führt. Weiterhin wirken sich Drehschwingungen der Begrenzungseinrichtung, die eine entsprechende Neigung mit sich bringen, nicht stark aus. Da der Randbereich des Schutzbereichs die Funktion hat, einen sich von der Seite annähernden Eingriff zu erkennen, ist der dort gegebenenfalls auftretende Unterschied im Abstand des Schutzfeldes von dem Bauteil in Begrenzungsrichtung von geringer Bedeutung.

Es ist dann weiterhin besonders bevorzugt, dass die Begrenzungseinrichtung wenigstens zwei reflektierende oder retroreflektive Elemente umfasst, die eine Codierung darstellen. Auf diese Weise ist auch eine laterale Auflösung des Schutzbereichs in Zonen möglich.

Dabei ist es weiterhin bevorzugt, dass die reflektierenden oder retroreflektiven Elemente so gegeneinander geneigt sind, dass ein Abfall einer Intensität des Sende- und/oder Empfangslichtbündels in Richtung eines Randes des Lichtbündels im Wesentlichen ausgleichbar ist. Für den Lichtempfänger ergibt sich somit ein gleichmäßig ausgeleuchteter Schutzbereich. Typischerweise werden Zonen retroreflektiver Elemente im Bildmittenbereich um eine Winkel abweichend von senkrecht auf sie treffende Strahlen verkippt. Die Größe der Verkippung der retroreflektiven Elemente nimmt zum Bildrand bis auf Null ab. Aufgrund des mit steigendem Verkippungswinkel abnehmenden Wirkungsgrades der Retroreflexion kann so die abgebildete Energie im Bildmittenbereich verringert und der für Abbildungen typische Intensitätsabfall zum Bildrand hin ausgeglichen werden. Bei Verwendung von retroreflektiven Elementen können also insbesondere die in der Mitte des Sendelichtbündels liegenden retroreflektiven Elemente gegenüber den am Rand des Sendelichtbündels liegenden retroreflektiven Elementen so um einen geringen Winkel verkippt sein, dass das entsprechende Empfangslichtbündel, im Gegensatz zu einem Empfanglichtbündel eines retroreflektiven Elements am Rand des Sendelichtbündels, nur noch teilweise auf den Lichtempfänger bzw. ein entsprechendes lichtempfindliches Element darin fällt.

Insbesondere zur Überwachung eines flächigen Schutzbereichs ist es bevorzugt, dass der Lichtempfänger eine lineare Anordnung von Photodetektionselementen aufweist. Auf diese Weise wird, insbesondere in Verbindung mit einer Begrenzungseinrichtung mit einer codierten Reflektoreinheit, eine Auflösung auch in einer Richtung senkrecht zur Bahn des Bauteils ermöglicht.

Bevorzugt weist die erfindungsgemäße Schutzvorrichtung eine Auswerteschaltung zum Empfangen von Empfangssignalen des Lichtempfängers und zur Ausgabe entsprechender Überwachungssignale auf. Mit diesen Überwachungssignalen kann dann insbesondere ein Antrieb für das bewegte Bauteil angesteuert werden.

Weiterer Gegenstand der Erfindung ist ein Bauteil für eine Vorrichtung, das mit einer Antriebseinrichtung der Vorrichtung auf einer vorgegebenen Bahn bewegbar ist, und das sich dadurch auszeichnet, dass an dem Bauteil eine erfindungsgemäße Schutzvorrichtung gehalten ist, wobei der Schutzbereich wenigstens Teile der Bahn umfasst. Besonders bevorzugt ist dabei die Schutzvorrichtung an dem Bauteil so gehalten, dass das Sendelichtbündel in einer Richtung tangential zur Bahn des Bauteils divergiert und dass die Begrenzungseinrichtung das divergente Sendelichtbündel ebenfalls in einer Richtung im Wesentlichen tangential zu der Bahn begrenzt. Dadurch können insbesondere ohne Einschränkung der Sicherheit Schwingungseinflüsse in Richtung der Bahn weitgehend unterdrückt werden, so dass bei hoher Sicherheit nur wenige oder keine Verletzungen des Schutzbereichs erkannt werden, die nur durch Schwingungen verursacht sind. Es ergeben sich so geringere Ausfallzeiten.

Dabei ist es bevorzugt, dass der Lichtsender und die Begrenzungseinrichtung an zwei räumlich quer zur Bahn des Bauteils beabstandeten Haltearmen an dem Bauteil gehalten sind. Auf diese Weise kann sehr einfach ein Schutzbereich über die gesamte Breite des Bauteils erhalten werden.

Weiterer Gegenstand der Erfindung ist eine Formgebungsvorrichtung, insbesondere eine Biegepresse, mit einem als Formgebungswerkzeug, insbesondere Biegewerkzeug, ausgebildeten erfindungsgemäßen Bauteil mit einer erfindungsgemäßen Schutzvorrichtung, wobei der Schutzbereich wenigstens Teile der Bahn umfasst. Insbesondere für solche Vorrichtungen ergeben sich große Vorteile, da einerseits wegen der in der Regel bei der Formgebung auftretenden hohen Kräfte und hohen Werkzeuggeschwindigkeiten hohe Sicherheitsanforderungen gestellt werden und gleichzeitig nur geringe Ausfallzeiten erwünscht sind. Die Verwendung der erfindungsgemäßen Schutzvorrichtung erlaubt daher eine besonders sichere und effiziente Arbeitsweise der erfindungsgemäßen Formgebungsvorrichtung.

Die Erfindung wird nun weiter anhand der Zeichnungen erläutert. Es zeigen:
- Fig. 1: eine schematische, teilweise Seitenansicht einer Gesenk-Biegepresse mit einer konventionellen Schutzvorrichtung,
- Fig. 2: eine schematische teilweise Seitenansicht einer Gesenk-Biegepresse mit einer Schutzvorrichtung nach einer ersten bevorzugten Ausführungsform der Erfindung,
- Fig. 3: eine schematische, teilweise Seitenansicht einer Gesenk-Biegepresse mit einer Schutzvorrichtung nach einer zweiten bevorzugten Ausführungsform der Erfindung,
- Fig. 4: eine schematische, teilweise Seitenansicht von zwei Haltearmen mit einer Schutzvorrichtung einer Gesenk-Biegepresse nach einer dritten bevorzugten Ausführungsform der Erfindung,
- Fig. 5: eine schematische teilweise Draufsicht auf die Schutzvorrichtung in Fig. 4,
- Fig. 6: eine schematische Darstellung einer Begrenzungseinrichtung der Schutzvorrichtung in Fig. 4,
- Fig. 7: eine schematische Darstellung von Photodetektionselementen in einem Lichtempfänger der Schutzvorrichtung in Fig. 4,
- Fig. 8: eine schematische Darstellung einer Blende einer Schutzvorrichtung einer Gesenk-Biegepresse nach einer vierten bevorzugten Ausführungsform der Erfindung, und
- Fig. 9: eine schematische Darstellung einer Schutzbereichslage in der Schutzvorrichtung in Fig. 8.

In Fig. 2 umfasst eine Gesenk-Biegepresse ein Biegewerkzeug 32, das mit einer in der Fig. 2 nicht gezeigten Antriebseinrichtung entlang einer vorgegebenen linearen Bahn in einer Bewegungsrichtung B bewegbar ist, und ein stationäres Unterwerkzeug 34, auf dem ein Werkstück 36 zur Bearbeitung lagerbar ist.

Das Biegewerkzeug 32 weist eine V-förmige Unterseite auf. Komplementär zu dieser Unterseite des Biegewerkzeugs 32 ist die Oberseite des Unterwerkzeugs 34 ausgebildet und weist eine entsprechende V-förmige Biegenut auf, die in Fig. 2 nicht gezeigt ist.

An an dem Biegewerkzeug 32 befestigten Haltearmen 38 und 40 ist eine erfindungsgemäße Schutzvorrichtung nach einer ersten Ausführungsform der Erfindung gehalten. Diese umfasst einen an dem Haltearm 38 gehaltenen Lichtsender 42 und einen an dem Haltearm 40 gehaltenen Lichtempfänger 44, der über eine nicht gezeigte Leitung mit der Antriebseinrichtung der Gesenk-Biegepresse verbunden ist.

Der Lichtsender 42 umfasst in einem Gehäuse eine Lichtquelle 46 in Form einer Rotlicht- oder Infrarotlicht-Leuchtdiode und eine in Abstrahlrichtung vor der Lichtquelle 46 angeordnete Sendeoptik 48.

Die Sendeoptik 48 umfasst wenigstens eine Linse und ist so ausgebildet, dass Licht der Leuchtdiode 46 als Sendelichtbündel 50 abstrahlbar ist, das in einer Richtung parallel zur Bewegungsrichtung B des Biegewerkzeugs 32 divergent ist.

Weiterhin ist der Lichtsender 42 so an dem Haltearm 38 gehalten, dass das divergente Sendelichtbündel 50 in einer Richtung im Wesentlichen entlang der Unterseite des Biegewerkzeugs 32 und parallel zu dieser abstrahlbar ist. Dabei weist eine Lichtaustrittsöffnung des Lichtsenders 42 einen Abstand von der Größe eines Nachlaufwegs N, der wie oben definiert ist, von einer Unterkante des Biegewerkzeugs 32 auf, so dass auch das Sendelichtbündel 50 im Mittel diesen Abstand von der Unterkante des Biegewerkzeugs 32 aufweist.

Der Lichtempfänger 44 umfasst in einem Gehäuse eine Blende 52 als Begrenzungseinrichtung, eine Empfangsoptik 54, ein Photodetektionselement 56 zum Empfang von Rot- bzw. Infrarotlicht des Lichtsenders 42 und zur Abgabe entsprechender Empfangssignale und eine mit dem Photodetektionselement 56 verbundene Auswerteschaltung 57 zur Überwachung der Empfangssignale und Ausgabe von Überwachungssignalen an die Antriebseinrichtung.

Zur Überwachung eines Schutzbereichs unter dem Biegewerkzeug 32 wird während einer Bewegung des Biegewerkzeugs 32 von der Leuchtdiode 46 infrarotes Licht abgegeben und durch die Sendeoptik 48 in das Sendelichtbündel 50 umgeformt, das in einer Richtung parallel zur Bewegungsrichtung B des Biegewerkzeugs 32 divergent ist. Das Sendelichtbündel 50 durchquert einen entsprechenden mit dem Biegewerkzeug mitbewegten Raumbereich unter dem Biegewerkzeug 32 und wird durch die als Begrenzungseinrichtung wirkende Blende 52 auf ein Empfangslichtbündel 58 begrenzt, das wesentlich weniger divergent ist, als das Sendelichtbündel 50. Das Empfangslichtbündel 58 wird dann durch die Empfangsoptik 54 auf das Photodetektionselement 56 fokussiert. Das Photodetektionselement 56 empfängt das infrarote Licht und setzt es in ein elektrisches Signal um, das von der Auswerteschaltung 57 überwacht wird. Die Auswerteschaltung 57 gibt bei Nichtvorhandensein eines Empfangssignals ein Alarmsignal an die Antriebseinrichtung für das Biegewerkzeug 32 ab, so dass dessen Bewegung gestoppt wird.

Die Blende 52 lässt also nur ein Teilbündel 60 des Sendelichtbündels 50 passieren, das als Empfangslichtbündel 58 über die Empfangsoptik 54 dem Photodetektionselement 56 zugeführt wird. Nur wenn ein Gegenstand das Teilbündel 60 des divergenten Sendelichtbündels 50 abblockt, kann von dem Lichtempfänger 44 kein Licht empfangen werden, so dass das durch eine Blendenöffnung der Blende 52 definierte Teilbündel 60 einen schraffiert dargestellten Schutzbereich 62 der durch den Lichtsender 42 und den Lichtempfänger 44 gebildeten Schutzvorrichtung bildet.

Wie leicht in Fig. 2 zu erkennen, führt ein Verkippen des Lichtsenders 42 zwar zu einem entsprechend geschwenkten divergenten Sendelichtbündel 50', es wird jedoch durch die Blende 52 als Begrenzungseinrichtung nun ein anderes Teilbündel 60' des divergenten Sendelichtbündels 50' durchgelassen, das relativ zu dem Biegewerkzeug 32 die gleiche Lage und die gleiche Weite aufweist wie das Teilbündel 60. Die Lage des Schutzbereichs 62 relativ zu dem Biegewerkzeug 32 bleibt daher selbst bei Bewegung des Lichtsenders 42 im Wesentlichen unverändert. Auch eine Bewegung des Lichtempfängers 44 ändert die Lage des Schutzbereichs 62 relativ zu dem Biegewerkzeug 32 nicht wesentlich, da kleine Bewegungen des Lichtempfängers 42 und damit der Begrenzungseinrichtung in Form der Blende 52, im Gegensatz zu Bewegungen des Lichtsenders 42, nicht zu einem Schwenken des Teilbündels 60 führen, sondern allenfalls zu kleinen Verschiebungen.

Um eine hinreichende Unempfindlichkeit gegen den Einfluss von Schwingungen zu erreichen, beträgt ein Öffnungswinkel α des divergenten Sendelichtbündels 50 bei einem 2 m langen Biegewerkzeug beispielsweise etwa 1°, wobei die Blende 52 dann eine Blendenöffnung mit einer Weite von beispielsweise etwa 5 mm in der Begrenzungsrichtung parallel zu der Bewegungsrichtung B aufweisen kann, so dass die Weite des Sendelichtbündels 50 an der Blende 52 etwa 3,5 cm beträgt. Die in den Figuren verwendeten Winkel und Längen sind, soweit nichts anderes erwähnt ist, nur zur besseren Darstellung und daher nicht unbedingt realistisch gewählt.

Um ein rechtzeitiges Abstoppen des Biegewerkzeugs 32 zu ermöglichen, sind der Lichtsender 42 und der Lichtempfänger 44 an den Haltearmen 38 bzw. 40 so gehalten, dass der Schutzbereich 62 im wesentlichen parallel zu der Unterkante des Biegewerkzeugs 32 im Abstand des Nachlaufweges N verläuft, der die Strecke bezeichnet, die notwendig ist, um das Biegewerkzeug 32 maximal schnell bis zum Stillstand abzubremsen.

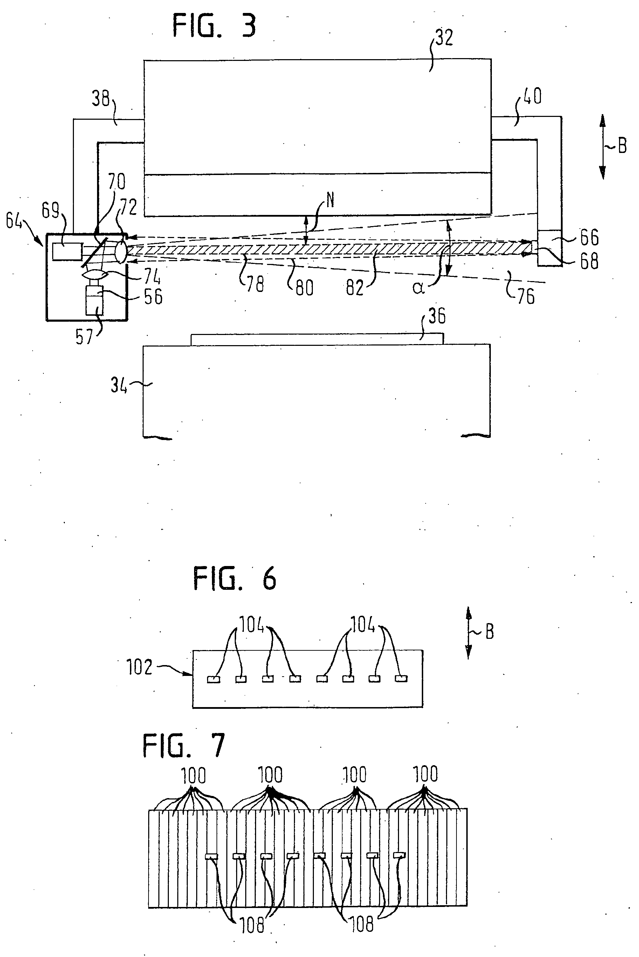

In Fig. 3 ist eine Gesenk-Biegepresse mit einer Schutzvorrichtung nach einer zweiten bevorzugten Ausführungsform der Erfindung gezeigt, die sich nur durch die Ausbildung der Schutzvorrichtung von dem ersten Ausführungsbeispiel unterscheidet. In Bezug auf die gleichen Komponenten, insbesondere der Gesenk-Biegepresse, gelten daher die gleichen Ausführungen wie in dem vorhergehenden Ausführungsbeispiel und es werden die gleichen Bezugszeichen verwendet.

Die Schutzvorrichtung umfasst nun einen Lichtsender und einen Lichtempfänger, die zu einer Sende-/Empfangseinheit 64 zusammengefasst und an dem Haltearm 38 gehalten sind. An einem Halter 66 an dem Haltearm 40 ist eine Begrenzungseinrichtung in Form eines reflektierenden Elements 68 angeordnet.

Die Sende-/Empfangseinheit 64 umfasst für den Lichtsender als Lichtquelle eine Laserdiode 69 für rotes Licht, einen Strahlteiler 70 und eine Sende-/Empfangsoptik 72 und für den Lichtempfänger neben der Sende-/Empfangsoptik 72 und dem Strahlteiler 70 eine weitere Empfangsoptik 74, ein Photodetektionselement 56 und eine Auswerteschaltung 57. Das Photodetektionselement 56 und die Auswerteschaltung 57 sind wie in dem Ausführungsbeispiel zuvor ausgebildet.

Der Strahlteiler 70 ist durch einen halbdurchlässigen Spiegel gebildet.

Das reflektierende Element 68 ist durch einen für Licht der Laserdiode 69 reflektierenden Spiegel gebildet, während der Halter 66 das Licht nicht oder nur schwach reflektiert.

Zur Überwachung wird Licht der Laserdiode 69 durch den Strahlteiler 70 und die Sende-/Empfangsoptik 72 zu einem divergenten Sendelichtbündel 76 geformt, das zwischen dem Biegewerkzeug 32 und dem Unterwerkzeug 34 hindurch gestrahlt wird und das in einer Richtung parallel zu der Bewegungsrichtung B des Biegewerkzeugs 32 divergent ist.

Das Sendelichtbündel 76 trifft dann auf das reflektierende Element 68 und den Halter 66, wobei es im Wesentlichen nur an dem reflektierenden Element 68 reflektiert wird. Es wird also ein Teilbündel 78 des Sendelichtbündels 76 als Empfangslichtbündel 80 zu der Sende-/Empfangseinheit 64 zurückgeworfen. Die Weite des Teilbündels 78 und die des Empfangslichtbündels 80 sind dabei durch die Ausdehnung des reflektierenden Elements 68 parallel zur Bahn des Biegewerkzeugs 32 , d.h. im Beispiel der Bewegungsrichtung B, bestimmt. Das reflektierende Element 68 stellt also eine Begrenzungseinrichtung im Sinne der Erfindung dar.

Das Empfangslichtbündel 80 wird durch die Sende-Empfangsoptik 72, den Strahlteiler 70 und die weitere Empfangsoptik 74 auf das Photodetektionselement 56 fokussiert bzw. umgelenkt.

Analog zu dem Teilbündel 60 des Sendelichtbündels 50 im vorhergehenden Ausführungsbeispiel ist nun ein Schutzbereich 82 im Wesentlichen durch das Teilbündel 78 gegeben, da nur dessen Blockierung zu einer Änderung des von der Sende-/Empfangseinheit 64 empfangenen Empfangslichtbündels 80 führt.

Das reflektierende Element 68 und die Sende-/Empfangseinheit 64 sind wiederum so angeordnet, dass der Schutzbereich 82 im Wesentlichen parallel zu der Unterseite des Biegewerkzeugs 32 im Abstand des Nachlaufweges N angeordnet ist.

Um eine hohe Funktionssicherheit zu erhalten, ist die Sende-Empfangsoptik 72 so ausgebildet, dass ein Öffnungswinkel α des Sendelichtbündels 76 so groß ist, dass dessen Weite in einer Ebene parallel zu dem reflektierenden Element 68 unmittelbar an dem reflektierenden Element 68 etwa zehnmal größer ist als die Ausdehnung des reflektierenden Elements 68 in dieser Richtung. Die Weiten des Teilbündels 78 und des Empfangslichtbündels 80 unmittelbar an dem reflektierenden Element sind daher, bestimmt durch die entsprechende Ausdehnung des reflektierenden Elements, etwa um einen Faktor 10 kleiner als die Weite des Sendelichtbündels 76 an dieser Stelle.

Die Funktion der Schutzvorrichtung des zweiten Ausführungsbeispiels und insbesondere auch die Unempfindlichkeit gegen Schwingungen ergeben sich analog zu der des ersten Ausführungsbeispiels.

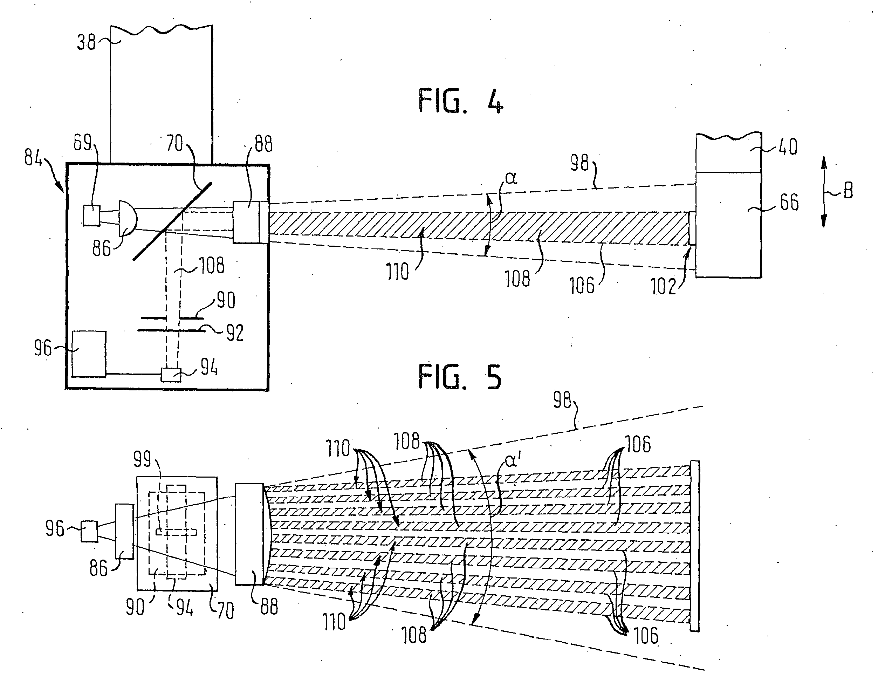

Eine Gesenk-Biegepresse mit einer Schutzvorrichtung nach einer dritten bevorzugten Ausführungsform der Erfindung ist teilweise in den Fig. 4 bis 7 gezeigt. Sie unterscheidet sich von der Gesenk-Biegepresse in dem zweiten Ausführungsbeispiel durch die Ausbildung der Begrenzungseinrichtung und die Ausbildung der Sende-/Empfangseinheit. Für gleiche Komponenten werden daher die gleichen Bezugszeichen verwendet und es gelten die Ausführungen zu diesen Komponenten entsprechend auch in diesem Ausführungsbeispiel.

Eine einem Lichtsender und einem Lichtempfänger umfassende Sende-/Empfangseinheit 84, die an dem Arm 38 gehalten ist, weist eine Laserdiode 69 für rotes Licht, eine Zylinderlinse 86, einen Strahlteiler 70, eine asphärische Linse 88, eine Schlitzblende 90, ein Farbfilter 92 und eine Zeilenkamera 94 auf, die mit einer Auswerteschaltung 96 verbunden ist.

Die Zylinderlinse 86 und die asphärische Linse 88 sind so ausgebildet und angeordnet, dass Licht der Laserdiode 69 zu einem in zwei zueinander orthogonalen Richtungen divergenten Sendelichtbündel 98 geformt wird, das parallel zu der Bewegungsrichtung B des Biegewerkzeugs 32 einen Öffnungswinkel α aufweist, der kleiner ist als ein weiterer Öffnungswinkel α' in einer Richtung orthogonal zu der Bewegungsrichtung B.

Dabei ist die asphärische Linse 88 weiterhin so ausgebildet, dass empfangenes Licht nach Reflexion an dem Strahlteiler 70 durch die Schlitzblende 90 und der Farbfilter 92 auf die Zeilenkamera 94 fokussiert wird.

Die Schlitzblende 90 weist einen Schlitz 99 auf, der in einer Ebene durch die Haltearme 38 und 40 senkrecht zu der Bewegungsrichtung B angeordnet ist.

Der Farbfilter 92, der einen Interferenzfilter umfasst, dient zur Beseitigung von Fremd- bzw. Störlicht und ist im Wesentlichen nur für Licht der Laserdiode 69 durchlässig.

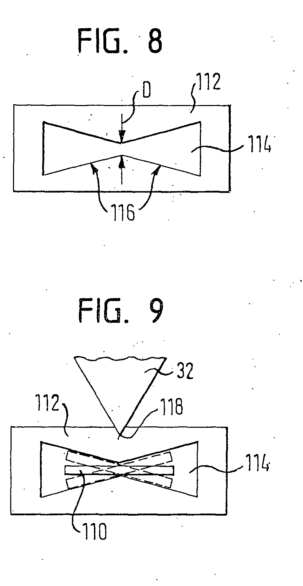

Die Zeilenkamera 94 umfasst eine Vielzahl von länglichen, quer zur ihrer Längsrichtung parallel zueinander angeordneten Photodetektionselementen 100 in CMOS- oder CCD-Technik (vgl. Fig. 7), die entlang ihrer Längsachse einer Länge von etwa 250 µm und in einer Richtung quer hierzu eine Länge von etwa 12,5 µm aufweisen (vgl. Fig. 7).

Die Zeilenkamera 94 ist mit der Auswerteschaltung 96 verbunden, die von den Photodetektionselementen 100 bei Empfang von Licht abgegebene elektrische Signale empfängt und überwacht. Bei Feststellung einer Unterbrechung eines Lichtweges wird dabei ein Alarmsignal an die Antriebseinrichtung des Biegewerkzeugs 32 abgegeben.

Eine an dem Halter 66 an dem Haltearm 40 gehaltene Begrenzungseinrichtung 102 weist parallele, flach rechteckige, retroreflektive Elemente 104 auf (vgl. Fig. 6), die quer zu der linearen Bahn des Biegewerkzeugs und damit der Bewegungsrichtung B angeordnet sind. Die kurzen Seiten der retroreflektiven Elemente sind dabei parallel zu der Bewegungsrichtung B ausgerichtet. Durch diese Anordnung wird eine Codierung gebildet. Die retroreflektiven Elemente 104 sind aus einer konventionellen retroreflektiven Folie gebildet.

Zur Überwachung wird insbesondere während der Bewegung des Biegewerkzeugs 32 Licht der Laserdiode 69 wird durch die Zylinderlinse 86 und die asphärische Linse 88 in das divergente Sendelichtbündel 98 gebündelt, das in einer Richtung parallel zu der Bewegungsrichtung B weniger divergent ist als in einer Richtung senkrecht dazu (vgl. Fig. 4 und 5). Bei einem Abstand der Begrenzungseinrichtung von der Sende-/Empfangseinheit 84 von beispielsweise 2 m können der Öffnungswinkel α beispielsweise 1° und der Öffnungswinkel α' beispielsweise etwa 0° betragen.

Die retroreflektiven Elemente 104 reflektieren entsprechend der Kodierung einen Fächer von Teilbündeln 106 in einen Fächer von Empfangslichtbündeln 108, die aufgrund der Retroreflexion nun etwas konvergent sind. Die gefächerten Teilbündel 106 bzw. Empfangslichtbündel 108 sind der Übersichtlichkeit halber in Fig. 5 nur teilweise als getrennte Bündel dargestellt.

Weiterhin wird das Sendelichtbündel 98 in einer Divergenzrichtung parallel zu der Bewegungsrichtung B durch die retroreflektiven Elemente 104 begrenzt, deren kurze Seiten parallel zu dieser Divergenzrichtung ausgerichtet sind. Deren Ausdehnung in der Bewegungsrichtung B ist entsprechend einer zu erwartenden mittleren Schwingungsamplitude der Sende/Empfangseinheit 84 um einen Faktor 10 kleiner gewählt als die Weite des Sendelichtbündels 98 an der Begrenzungseinrichtung 102. Die in die Empfangslichtbündel 108 reflektierten Teilbündel 106 sind daher in einer Richtung parallel zu der Bewegungsrichtung weniger divergent als das Sendelichtbündel 98. Damit ist die Weite des Sendelichtbündels 98 in der Divergenzrichtung parallel zur Bewegungsrichtung B an der Begrenzungseinrichtung 102 auch größer als einer Weite der durch die Reflexion erzeugten Empfanglichtbündel 108 unmittelbar an der Begrenzungseinrichtung 102.

Die Teilbündel 106 und, wegen der retroreflektiven Eigenschaften der retroreflektiven Elemente 104 auch die Empfangslichtbündel 108, definieren damit einen schraffiert dargestellten Schutzbereich 110, dessen Lage durch die Sende-/Empfangseinheit 84 und die Begrenzungseinrichtung 102 festgelegt wird, und der fächerartig, im wesentlichen flächig senkrecht zur Bewegungsrichtung B des Biegewerkzeugs 32 parallel zu dessen Unterseite in einem dem Nachlaufwegs N entsprechenden Abstand angeordnet ist.

Die Empfangslichtbündel 108 werden durch die asphärische Linse 88 über den Strahlteiler 70 durch die Schlitzblende 90 geführt. Der Schlitz 99 der Schlitzblende 90 ist parallel zu einer Divergenzrichtung der Empfangslichtbündel 108 am Ort der Schlitzblende angeordnet, die der Richtung entspricht, in der das Sendelichtbündel 98 durch die Begrenzungseinrichtung 102 in der Bewegungsrichtung B auf die Empfangslichtbündel 108 begrenzt wurde. Der Schlitz 99 ist damit auch senkrecht zu der Bewegungsrichtung B angeordnet. Die Schlitzblende 90 bewirkt daher eine Erhöhung der Tiefenschärfe senkrecht zur Bewegungsrichtung B des Biegewerkzeugs 32, nicht aber eine in einer dazu orthogonalen Richtung, die der Richtung entspricht, in der das divergente Sendelichtbündel 98 parallel zur Bewegungsrichtung B begrenzt wurde,

Nach Passieren des Farbfilters 92, in dem Fremd- und Störlicht ausgefiltert wird, erscheint auf der Zeilenkamera 94 die in Fig. 7 nur schematisch gezeigte Abbildung der retroreflektiven Elemente 104, so dass eine räumliche Auflösung in dem Suchbereich senkrecht zur Bewegungsrichtung B gegeben ist. In Fig. 7 sind dabei die Photodetektionselemente 100 der Übersichtlichkeit halber im Vergleich zu den Bildern der retroreflektiven Elemente 104 zu breit dargestellt.

Die Photodetektionselemente 104 sind dabei mit ihren Längsrichtungen parallel zu dem Schlitz 99 und damit einer Divergenzrichtung der Empfangslichtbündel 108 am Ort der Photodetektionselemente 104 angeordnet, die der Richtung entspricht, in der das Sendelichtbündel 98 durch die Begrenzungseinrichtung 102 in der Bewegungsrichtung B auf die Empfangslichtbündel 108 begrenzt wurde. Dadurch können die Auswirkungen von schwingungsbedingten Bewegungen der Begrenzungseinrichtung 102 und damit der Empfangslichtbündel 108 parallel zu der Bewegungsrichtung B einfach abgefangen werden.

Durch die Verwendung der Begrenzungseinrichtung 102 mit retroreflektiven Elementen 104 ergibt sich so, analog zu den ersten beiden Ausführungsbeispielen, auch bei Schwingungen der Sende-/Empfangseinheit 84 und der Begrenzungseinrichtung 102 zueinander in Bewegungsrichtung B oder bei Kippbewegungen der Sende-/Empfangseinheit 84 gegenüber der Begrenzungseinrichtung 102 in einer Ebene, die die Bewegungsrichtung B enthält, ein relativ zu dem Biegewerkzeug 32 konstant angeordneter, in Bewegungsrichtung B schmaler Schutzbereich 110, der eine sichere Überwachung des Bereichs unter dem Biegewerkzeug 32 und damit geringe Ausfallzeiten der Gesenk-Biegepresse gestattet.

Eine Gesenk-Biegepresse mit einer Schutzvorrichtung nach einer vierten bevorzugten Ausführungsform der Erfindung ist teilweise in den Fig. 8 und 9 gezeigt. Sie ist im Wesentlichen wie die Gesenk-Biegepresse in dem dritten Ausführungsbeispiel ausgebildet, so dass für gleiche Komponenten die gleichen Bezugszeichen verwendet werden und die Ausführungen zu diesen Komponenten entsprechend auch in diesem Ausführungsbeispiel gelten.

Im Unterschied zu der Gesenk-Biegepresse in dem dritten Ausführungsbeispiel ist zwischen der asphärischen Linse 88 und dem Strahlteiler 70 eine Blende 112 vorgesehen, die eine schmetterlingsförmige Blendenöffnung 114 aufweist (vgl. Fig. 8). Zwei Flügelbereiche 116 der Blendeöffnung 114 sind im Wesentlichen parallel zu dem flächigen Schutzbereich 110 und damit quer zu der Bewegungsrichtung B bzw. der Richtung angeordnet, in der das divergente Sendelichtbündel 98 durch die Begrenzungseinrichtung 102 begrenzbar ist (vgl. Fig. 9).

Eine Weite D einer Einschnürung der Blendenöffnung 114 entspricht der Höhe der retroreflektiven Elemente 104 in der Richtung der Bewegungsrichtung B.

Die Blende 112 ist in einem solchen Abstand von einer Unterkante 118 des Biegewerkzeugs 32 angeordnet, dass der Schutzbereich 110 auf der Höhe der Einschnürung der Blendenöffnung 114 liegt und die Empfangslichtbündel 108 diese passieren können (vgl. Fig. 9).

Bei einer Dejustierung zwischen der Begrenzungseinrichtung 102 und der Sende-/Empfangseinheit 84 in Bewegungsrichtung B wird der Lichtweg in der Mitte des Schutzbereichs 110 unterbrochen, da die Empfangslichtbündel 108 in diesem Bereich die dort nur schmale Blendenöffnung 114 nicht mehr passieren können. Eine solche Dejustierung in der hoch sicherheitsrelevanten Richtung unmittelbar unter der Unterkante 118 des Biegewerkzeugs 32 ist daher leicht erkennbar.

Eine Dejustierung in der Winkellage der Blende 112 bzw. der Sende/Empfangseinheit 84 zu der Begrenzungseinrichtung 102 und damit dem Schutzbereichs 110, beispielsweise durch Montageungenauigkeiten oder durch Schwingungen, führt dagegen nicht unbedingt zu einer Unterbrechung des Lichtweges. Dies ist in Fig. 9, in der die Blende 112 nur schematisch unter Auslassung der asphärischen Linse 88 gezeigt ist, veranschaulicht. Die Flügelbereiche 114 sind so ausgebildet, dass die Empfangslichtbündel 108 bei Dejustierungen um Winkel von bis zu etwa 3° immer noch die Blende 112 passieren können und eine Unterbrechung des Lichtweges nicht stattfindet. Da der Randbereich des Schutzbereichs 110 die Funktion hat, einen sich der Seite annähernden Eingriff zu erkennen, sind die unterschiedlichen Abstände des Schutzbereichs 110 von dem Biegewerkzeug 32 in diesem Bereich von geringer Bedeutung.

Durch Schwingungen verursachte Verkippungen zwischen der Sende/Empfangseinheit 84 und der Begrenzungseinrichtung entlang der Unterkante 118 des Biegewerkzeugs 32 wirken sich nicht negativ aus, da die retroreflektiven Elemente 104 das Sendelichtbündel 98 bzw. die Teilbündel 106 im Wesentlichen auf sich selbst reflektieren. Darüber hinaus weisen beispielsweise retroreflektive Folien bei der Reflexion einen gewissen Streuanteil auf, durch den solche Dejustierungen ebenfalls wenigstens teilweise kompensiert werden.

### Bezugszeichenliste

- 10: Biegewerkzeug
- 12: Unterwerkzeug
- 14: Werkstück
- 16: Haltearm
- 18: Haltearm
- 20: Lichtsender
- 22: Lichtempfänger
- 24: Lichtquelle
- 26: Sendeoptik
- 27: Sendelichtbündel
- 28: Photodetektionselement mit Auswerteelektronik
- 30: Empfangsoptik
- 32: Biegewerkzeug
- 34: Unterwerkzeug
- 36: Werkstück
- 38: Haltearm
- 40: Haltearm
- 42: Lichtsender
- 44: Lichtempfänger
- 46: Leuchtdiode
- 48: Sendeoptik
- 50, 50': Sendelichtbündel
- 52: Blende
- 54: Empfangsoptik
- 56: Photodetektionselement
- 57: Auswerteschaltung
- 58: Empfangslichtbündel
- 60,60': Teilbündel
- 62: Schutzbereich
- 64: Sende-/ Empfangseinheit
- 66: Halter
- 68: reflektierendes Element
- 69: Laserdiode
- 70: Strahlteiler
- 72: Sende- und Empfangsoptik
- 74: weitere Empfangsoptik
- 76: Sendelichtbündel
- 78: Teilbündel
- 80: Empfangslichtbündel
- 82: Schutzbereich
- 84: Sende-/Empfangseinheit
- 86: Zylinderlinse
- 88: asphärische Linse
- 90: Schlitzblende
- 92: Farbfilter
- 94: Zeilenkamera
- 96: Auswerteinheit
- 98: Sendelichtbündel
- 99: Schlitz
- 100: Photodetektionselemente
- 102: Begrenzungseinrichtung
- 104: retroreflektive Elemente
- 106: Teilbündel
- 108: Empfangslichtbündel
- 110: Schutzbereich
- 112: Blende
- 114: Blendenöffnung
- 116: Flügelbereiche
- 118: Unterkante

- α, α': Öffnungswinkel
- B: Bewegungsrichtung
- D: Weite der Einschnürung
- N: Nachlaufweg

## Patentansprüche

1. Schutzvorrichtung zur Befestigung an einem entlang einer Bahn (B) beweglichen Bauteil (32) und zur Überwachung eines mit dem Bauteil (32) zu bewegenden Schutzbereichs (62; 82; 110) mit
einem Lichtsender (42; 64; 84) zur Abstrahlung eines divergenten Sendelichtbündels (50, 50'; 76; 98) in einen den Schutzbereich (62; 82; 110) enthaltenden Raumbereich,
einem Lichtempfänger (44; 64; 84) zum Empfang wenigstens eines Teils des Lichts des in den Raumbereich gestrahlten Sendelichtbündels (50, 50'; 76; 98) des Lichtsenders (42; 64; 84) und zur Abgabe entsprechender Empfangssignale, und
einer Begrenzungseinrichtung (52; 68; 102), die in Richtung eines Sendelichtweges hinter einem Abschnitt des Sendelichtweges, der den Schutzbereich (62; 82; 110) enthält, angeordnet ist und mittels derer das Sendelichtbündel (50, 50'; 76; 98) auf ein die Weite des Schutzbereichs (62; 82; 110) in wenigstens einer Richtung bestimmendes, weniger divergentes Empfangslichtbündel (58; 80; 108) begrenzbar ist.

2. Schutzvorrichtung nach Anspruch 1,
**dadurch gekennzeichnet,**
**dass** ein Öffnungswinkel des Sendelichtbündels (50, 50'; 76; 98) so gewählt ist, dass in einer vorgegebenen Richtung orthogonal zum Sendelichtweg unmittelbar vor der Begrenzungseinrichtung (52; 68; 102) eine Weite des Sendelichtbündels (50, 50'; 76; 98) um einen Faktor 10 größer ist als eine entsprechende Weite des Empfangslichtbündels (58; 80; 108) direkt an der Begrenzungseinrichtung (52; 68; 102).

3. Schutzvorrichtung nach Anspruch 1 oder 2,
**dadurch gekennzeichnet,**
**dass** ein Öffnungswinkel des Sendelichtbündels (50, 50'; 76; 98) so gewählt ist, dass in einer vorgegebenen Richtung orthogonal zum Sendelichtweg unmittelbar vor der Begrenzungseinrichtung (52; 68; 102) eine Weite des Sendelichtbündels (50, 50'; 76; 98) direkt an der Begrenzungseinrichtung (52; 68; 102) größer ist als eine durch eine Relativbewegung von Lichtsender (42; 64; 84) und Begrenzungseinrichtung (52; 68; 102) verursachte, mittlere zu erwartenden Bewegungsamplitude des Sendelichtbündels (50, 50'; 76; 98) unmittelbar an der Begrenzungseinrichtung (52; 68; 102).

4. Schutzvorrichtung nach einem der vorhergehenden Ansprüche,
**dadurch gekennzeichnet,**
**dass** die Begrenzungseinrichtung eine Blende (52) umfasst.

5. Schutzvorrichtung nach einem der vorhergehenden Ansprüche,
**dadurch gekennzeichnet,**
**dass** die Begrenzungseinrichtung ein reflektierendes Element (68) umfasst, an dem ein dem Lichtempfänger (44) zuzuführendes Teilbündel (78) des divergenten Sendelichtbündels (50, 50') reflektierbar ist, oder
**dass** die Begrenzungseinrichtung (102) ein retroreflektives Element (104) umfasst, an dem ein dem Lichtempfänger (84) zuzuführendes Teilbündel (106) des divergenten Sendelichtbündels (98) reflektierbar ist.

6. Schutzvorrichtung nach Anspruch 5,
**dadurch gekennzeichnet,**
**dass** der Lichtsender (64; 84) und der Lichtempfänger (64; 84) auf der gleichen Seite des Schutzbereichs (82; 110) angeordnet sind, und
**dass** vorzugsweise der Lichtsender (64; 84) und der Lichtempfänger (64; 84) einen gemeinsamen Strahlteiler (70) und wenigstens eine in Senderichtung nach dem Strahlteiler (70) angeordnete gemeinsame Sende-/Empfangslinse (72; 88) aufweisen.

7. Schutzvorrichtung nach einem der vorhergehenden Ansprüche,
**dadurch gekennzeichnet,**
**dass** der Lichtempfänger (44; 64; 84) wenigstens ein Empfangselement (100) aufweist, dessen Empfangsfläche in einer Divergenzrichtung des Empfangslichtbündels (58; 80; 108), die der Richtung (B) entspricht, in der das divergente Sendelichtbündel durch die Begrenzungseinrichtung (52; 68; 102) begrenzt wurde, eine größere Ausdehnung aufweist als in einer Richtung orthogonal dazu.

8. Schutzvorrichtung nach einem der vorhergehenden Ansprüche,
**dadurch gekennzeichnet,**
**dass** der Lichtempfänger (84) eine Schlitzblende (90) aufweist, deren Schlitz (99) parallel zu einer Divergenzrichtung des Empfangslichtbündels (108), die der Richtung entspricht, in der das divergente Sendelichtbündel (98) durch die Begrenzungseinrichtung (102) begrenzbar ist, angeordnet ist.

9. Schutzvorrichtung nach einem der vorhergehenden Ansprüche,
**dadurch gekennzeichnet,**
**dass** der Lichtsender (84) so ausgebildet ist, dass von ihm ein Sendelichtbündel (98) abgebbar ist, das in zwei zueinander orthogonalen Richtungen unterschiedlich stark divergiert, und
**dass** vorzugsweise der Lichtsender (84) und die Begrenzungseinrichtung (102) zur Überwachung eines in einer zu einer Bewegungsrichtung des Bauteils (32) orthogonalen Richtung flächigen Schutzbereichs (110) ausgebildet sind.

10. Schutzvorrichtung nach einem der vorhergehenden Ansprüche,
**dadurch gekennzeichnet,**
**dass** der Lichtempfänger (84) eine Blende (112) mit einer schmetterlingsförmigen Blendenöffnung (114) aufweist, die zwei Flügelbereiche (116) umfasst, die quer zu der Richtung (B) angeordnet sind, in der das divergente Sendelichtbündel (98) durch die Begrenzungseinrichtung (102) begrenzbar ist.

11. Schutzvorrichtung nach einem der Ansprüche 9 oder 10 und einem der Ansprüche 5 oder 6 oder nach einem der Ansprüche 9 oder 10 und einem der Ansprüche 7 oder 8 und einem der Ansprüche 5 oder 6,
**dadurch gekennzeichnet,**
**dass** die Begrenzungseinrichtung (102) wenigstens zwei reflektierende oder retroreflektive Elemente (104) umfasst, die eine Kodierung darstellen, und
**dass** die reflektierenden oder retroreflektiven Elemente (104) vorzugsweise so gegeneinander geneigt sind, dass ein Abfall einer Intensität des Sende- und/oder Empfangslichtbündels (98; 108) in Richtung eines Randes des Lichtbündels im Wesentlichen ausgleichbar ist.

12. Schutzvorrichtung nach einem der vorhergehenden Ansprüche,
**dadurch gekennzeichnet,**
**dass** der Lichtempfänger (44; 64; 84) eine lineare Anordnung von Photodetektionselementen (100) aufweist.

13. Schutzvorrichtung nach einem der vorhergehenden Ansprüche, **gekennzeichnet durch**
eine Auswerteschaltung (57; 96) zum Empfang von Empfangssignalen des Lichtempfängers (44; 64; 84) und zur Ausgabe entsprechender Überwachungssignale.

14. Bauteil für eine Vorrichtung, das mit einer Antriebseinrichtung der Vorrichtung auf einer vorgegebenen Bahn (B) bewegbar ist,
**dadurch gekennzeichnet,**
**dass** an dem Bauteil (32) eine Schutzvorrichtung nach einem der vorhergehenden Ansprüche gehalten ist, wobei der Schutzbereich (62; 82; 110) wenigstens Teile der Bahn (B) umfasst,
wobei insbesondere der Lichtsender (42; 64; 84) und die Begrenzungseinrichtung (52; 68; 102) an zwei räumlich quer zur Bahn (B) des Bauteils (32) beabstandeten Haltearmen (38, 40) an dem Bauteil (32) gehalten sind.

15. Formgebungsvorrichtung, insbesondere Biegepresse, mit einem als Formgebungswerkzeug, insbesondere Biegewerkzeug, ausgebildeten Bauteil nach Anspruch 14.

16. Verfahren zur Überwachung eines Schutzbereichs (62; 82; 110), der mit einem entlang einer Bahn (B) bewegten Bauteil (32) mitzubewegen ist, bei dem
ein divergentes Sendelichtbündel (50, 50'; 76; 98) ausgesendet und mit dem Bauteil (32) mitbewegt wird,
das divergente Sendelichtbündel (50, 50'; 76; 98) nach Zurücklegen eines den Schutzbereich (62; 82; 110) umfassenden Lichtweges auf ein mit dem Bauteil (32) mitbewegtes, die Weite des Schutzbereichs (62; 82; 110) in wenigstens einer Richtung bestimmendes, weniger divergentes Empfangslichtbündel (58; 80; 108) begrenzt wird, und das Empfangslichtbündel (58; 80; 108) empfangen und überwacht wird.

17. Verfahren nach Anspruch 16,
**dadurch gekennzeichnet,**
**dass** zur Begrenzung des Sendelichtbündels (50, 50'; 76; 98) ein reflektierendes Element (68) verwendet wird, oder
**dass** zur Begrenzung des Sendelichtbündels (50, 50'; 76; 98) ein retroreflektives Element (104) verwendet wird.
